# EUROPEAN PATENT APPLICATION

(11) **EP 3 121 121 A1**
(43) Date of publication of application: **25.01.2017**
(21) Application number: 15177959.2
(22) Date of filing: 22.07.2015
(51) Int. Cl.: B64D 45/00

(54) **SYSTEM AND METHOD FOR SECURING AN AIRCRAFT**

(71) Applicant: Butaye, Nicolas, 7190 Ecaussinnes (BE)
(72) Inventor: Butaye, Nicolas, 7190 Ecaussinnes (BE)

(57) **Abstract**

System for regulating operation of an aircraft during a flight, comprising:
- authenticating means (1) for authenticating persons authorized to operate the aircraft;
- monitoring means (2) for monitoring the operation of the aircraft and configured to request authentication by the authenticating means (1) of at least two persons authorized to operate the aircraft upon detection of a flight restricted event;
- restricting means (4) for restricting at least partially access to the controls of the aircraft from the flight control input devices (5);
wherein said monitoring means (2) are configured to activate said restricting means (4) if the authentication of the at least two persons requested by the monitoring means (2) is not successful, said monitoring means (2) being configured to deactivate restricting means (4) upon a successful authentication of at least two people authorized to operate the aircraft.

## Description

### Field of the invention

The present invention relates to a system and method to increase the safety in an aircraft.

### Description of prior art

The present invention relates to a system and method to increase the safety in an aircraft.

Statistically speaking, air travel has been considered safer than other presumably safe activities; for example, routinely there have been more people involved in auto or gun related accidents or fires than people involved in aircraft related accidents. The occasional hijacking was not considered a major threat, as most ended without passenger casualties or damage to aircraft.

The attitude toward air travel forever changed on September 11, 2001, when the World Trade Center in New York, NY and the Pentagon in Washington, D.C. became the objects of a terrorist attack of previously unimaginable proportions. Following these events, the airlines considerably strengthened the security to try to prevent hijacking of aircraft.

Among the measures taken by the airlines and plane manufacturers, a lockable door separating the passenger and cockpit areas of the plane was introduced in most of the commercial aircrafts. Such door can be locked from the cockpit and provided a switch is actuated by the pilot or the copilot inside the cockpit, there is absolutely no way to open it from outside the cockpit for a substantial period of time (around 20 minutes). Although such door constitutes an efficient measure preventing hijackers to penetrate the cockpit and to take control of the aircraft, it also introduced a threat to the aircraft safety when the official pilot or copilot is himself ill-intentioned. When the pilot or copilot leaves the cockpit, for example to use the bathroom, the remaining (co)pilot can potentially lock out his alter ego of the cockpit and consequently becomes the only one in command of the aircraft. If the (co)pilot in command of the aircraft is ill-intentioned, the outcome of such situation can be a disaster. Although very rare, history has indeed shown that pilot suicides may happen and in case of commercial flights with tens of passengers, the consequences are dramatic. The most recent event of such type is of course the crash of Germaningwings flight 9525 where 150 people were killed, after the copilot suffering from serious depression locked out the pilot of the cockpit and rushed the aircraft to the ground. Besides psychiatric disease like depression, it is important to note that other causes like for example ideological fanaticism may also lead the (co)pilot to crash the aircraft.

Numerous documents from the prior art describe method and systems to improve the safety inside an aircraft by requesting an authentication of the person in command of the aircraft:
Document US 6,897,790 discloses a system of securing access to aircraft control systems using non-persistent secret identifiers in order to protect aircrafts from unauthorized operating by hijackers or terrorists. If no correct identifier is entered in the identifier receiver, the aircraft will enter a caution mode disengaging at least some of the aircraft control input devices. When there is a plurality of pilots, as it is the case in commercial aircrafts (usually one pilot and one copilot), the document however specifies that any of the pilots may at any time regain the control of the aircraft by entering his non-persistent identifier. The system/method described consequently prevents hijackers to take full control of the airplane thanks to the requested authentication with the help of the secret identifiers. It does however not provide a satisfying solution to prevent crashes due to (co)pilot suicide as any of the (co)pilots in possession of his non-persistent identifier can control the aircraft.
Document EP 1 494 164 describes an aircraft security system based on biometric data, wherein said system comprises means for, prior to each flight, loading said first biometric information electronically regarding all persons designated to said flight and authorized to operate the aircraft during said flight. The system further comprises means for restricting function of the control if it is determined that the person is not authorized to fly the aircraft. Once again such system would not prevent an accident due to an ill-intentioned authorized (co)pilot.
Document US 7,783,081 discloses a method and device for verification of identity aboard an aircraft combining a device for biometric authentication with a surveillance device as a video camera inside the cockpit, making it possible to control the conditions under which biometric authentication is performed. Such method and device would not be efficient against the actions of an ill-intentioned authorized (co)pilot.

### Summary of the invention

It is an object of the invention to prevent or at least reduce the hazardous consequences of the actions of an ill-intentioned pilot or copilot.

It is another object of the invention to prevent the threats to the actions of hijackers trying to take control of the aircraft.

To this end, the subject of the invention is a system for regulating operation of an aircraft during a flight, comprising:
- authenticating means for authenticating persons authorized to operate the aircraft;
- monitoring means for monitoring the operation of the aircraft and configured to request authentication by the authenticating means of at least two persons authorized to operate the aircraft upon detection of a flight restricted event;
- restricting means for restricting at least partially access to the controls of the aircraft from the flight control input devices;
wherein said monitoring means are configured to activate said restricting means if the authentication of the at least two persons requested by the monitoring means is not successful, said monitoring means being configured to deactivate restricting means upon a successful authentication of at least two people authorized to operate the aircraft.

Another subject of the invention is a computer implemented method for regulating operation of an aircraft during a flight, comprising the steps of:
- monitoring the operation of the aircraft and requesting authentication of at least two persons authorized to operate the aircraft upon detection of a flight restricted event, a flight restricted event being an event reflecting an increased risk for the safety of the passengers of the aircraft;
- restricting at least partially access to the controls of the aircraft if the authentication of the at least two persons requested by the monitoring means is not successful, stopping said restriction upon a successful authentication of at least two people authorized to operate the aircraft.

The term 'flight' as used herein should be construed to refer to its usual meaning, which is the motion of the aircraft starting just after the take-off and ending just before the landing of the aircraft.

The monitoring means, authenticating means and restricting means may comprise the aircraft's existing on board computer system or may comprise a separate computer system located on the aircraft itself or at designed locations outside of the aircraft, such as an air traffic control center, which is in communication with the on board computer system.

A flight restricted event is meant to be an event occurring during the flight and potentially reflecting a danger for the passengers of the aircraft or an increased risk for their safety. Such a flight restricted event is detected by the monitoring means, advantageously with the help of data collected by various sensors measuring physical parameters regarding the aircraft or its individual components, the aircraft's environment but also by sensors triggered by events occurring aboard the aircraft, especially actions performed by the crewmembers or passengers of the aircraft.

In an advantageous embodiment, the restricting means are also deactivated upon cancellation of the flight restricted event, when it is technically possible to cancel said flight restricted event. After being deactivated, the restricting means are of course activated again upon detection of a new flight restricted event.

The flight control input devices are meant to comprise any devices allowing the aircrew to control the aircraft. Such flight control input devices comprise for example a control yoke, centre stick or side stick to control the flight control surfaces and throttle controls to control the aircraft engines speed.

The restricting means are meant to comprise any mechanical or electronic devices being able to restrict input from the flight control input devices sent to the actuators of the flight control surfaces and to the aircraft engines, or to other controls of the aircraft.

With the system and method according to the invention, the request to authenticate at least two authorized people to operate the aircraft upon detection of an event potentially reflecting a danger for the passengers of the aircraft will considerably decrease the consequences of the actions of a potentially ill-intentioned person in control of the aircraft. Since a cross-check between two persons is requested before the flight restricted event is allowed to occur without restricting access to the controls of the aircraft, this system will greatly reduce the risk of an aircraft crash due to the madness or bad intentions of a single individual, even if he is the pilot or copilot of the aircraft.

In an advantageous embodiment, the two authorized persons whose authentication is requested by the monitoring means are persons aboard the aircraft. Advantageously, these persons are flight attendants and comprise the pilot and the copilot of the aircraft. Since these persons are in general the most qualified persons among the crewmembers to pilot the aircraft and to take decisions about the operations of the aircraft, it is advantageous to request their approval in case of a flight restricted event. Advantageously, the monitoring means will be configured to allow granting authority to operate the aircraft to additional persons during the flight, such as aircrew members or passenger pilots on the aircraft. Such feature of the aircraft will indeed be very useful in certain circumstances, for example, in case of illness or incapacitation during a flight of one of the two persons initially authorized to operate the aircraft. Such addition of a new authorized person to operate the aircraft during the flight will advantageously be submitted to the approval of at least one of the persons initially authorized to operate the aircraft or in case of incapacitation of all initially authorized persons, to the approval of a remote operator for example from an air traffic control center.

In an advantageous embodiment, after a non successful authentication, the system according to the invention will allow additional attempts to perform a successful authentication. This will guard against potential erroneous moves of the person trying to authenticate or punctual malfunctions of the authentication means. Advantageously, when the authenticating means detect too many attempts to perform an authentication, they will stop working for a limited period of time in order to prevent an unauthorized person to abuse the authenticating means through repeated attempts to find for example the required password or secret identifier.

In an advantageous embodiment, the flight restricted events comprise for example a request from the flight control input devices to descend below a pre-defined altitude. In such an embodiment, the restricting means activated by the monitoring means in case of a non successful authentication will advantageously be configured to restrict manual control from the input control devices such to prevent the aircraft to be steered below the pre-defined altitude. If subsequently the at least two authorized persons are properly authenticated, the monitoring means will deactivate the restricting means in order to allow the aircraft to descend below the pre-defined altitude.

This pre-defined altitude below which the aircraft cannot descend without the cross check according to the invention will prevent most of the crashes due to ill intentioned individual actions of a pilot or copilot. A typical pre-defined altitude suitable for this purpose is for example 3000 feet. The pre-defined altitude is advantageously a pre-adjustable parameter which can depend on the flight path. A higher pre-defined altitude could for example be programmed in case of a flight path across mountains. Of course the monitoring means will be configured to detect such restricted event only after the aircraft has initially climbed above said pre-defined altitude, in order not to conflict with the take-off phase when the aircraft has not yet reached said pre-defined altitude.

In an advantageous embodiment, when the aircraft has not yet reached the pre-defined altitude, a request from the flight control input devices to decrease the altitude of the aircraft will be considered by the monitoring means as a restricted event. This will allow preventing any potential ill-intentioned maneuvers of the aircraft by the pilot or copilot during the take-off phase of the aircraft.

In an advantageous embodiment, a predetermined amount of time without a successful authentication of at least two people authorized to operate the aircraft will be considered by the monitoring means as a restricted event. In such embodiment, the system according to the invention will guarantee that at least two authorized people, advantageously the pilot and copilot, are authenticated at regular time intervals during the entire flight.

In an advantageous embodiment, the restricting means can also restrict more extensively the manual controls of the aircraft, for example by entering the autopilot mode.

In an advantageous embodiment, the monitoring means are in communication with the flight management system of the aircraft. Such flight management system usually comprises a GPS and in this embodiment the restricted events comprise for example a request from the flight control input devices to deviate from a pre-defined course. The restricting means are in this case configured to enter the autopilot mode or another automatic flight control system preventing the aircraft to deviate from the pre-defined course. The system according to the invention will in this embodiment then advantageously require the authentication of the pilot and the copilot before deactivating the restricting means.

In an advantageous embodiment, the system according to the invention will comprise at least one lock button activable by the aircrew or other flight passengers. The at least one lock button will advantageously be found in the passenger area of the aircraft. The activation of the lock button will be detected by the monitoring means as a flight restricted event and will consequently lead to a request from the monitoring means to authenticate at least two people authorized to operate the aircraft. In an advantageous embodiment, the lock button will comprise means to authenticate the person activating the lock button such to limit the category of flight passengers and/or the number of times a given flight passenger can activate the lock button. In an advantageous embodiment, only the crewmembers are consequently allowed to activate the lock button. Advantageously, the passengers of the aircraft are authenticated with the help of their flight ticket or with an individual secret code given to them prior the take-off which offers them the possibility to activate the lock button a limited number of times. Advantageously, a regular passenger is allowed to activate the lock button only once. Such lock button will give the possibility to the aircrew or other flight passengers to request an authentication of the persons in control of the aircraft, in case of doubt regarding the identity of the pilots or troubles generated for example by hijackers. This will further increase the security inside the aircraft.

In an advantageous embodiment, the restricting means comprise an electronic module restricting the inputs from the pilot or copilot sent to the actuators of the flight control surfaces and to the aircraft engines. Such an embodiment is indeed well adapted to the "fly-by-wire" controls of the modern commercial aircrafts.

Advantageously, the restrictions applied by the restricting means to the inputs will depend on the restricted event occurring. To each class of flight restricted event, the restricting means applies a different restriction to the flight control input devices. For example, as explained above, in case of a request from the flight input control devices to descend below a pre-defined altitude, the restricting means when activated by the monitoring means will prevent the aircraft to descend below the pre-defined altitude. On the other hand, in case of a request to deviate from a pre-defined course detected with the help of a positioning system, the restricting means when activated by the monitoring means will prevent the aircraft to deviate from the pre-defined course.

Alternatively, the restricting means can be implemented such to define a caution mode wherein the aircraft is entered upon activation of the restricting means after occurrence of restricting events of different natures. The caution mode is consequently a safety mode wherein at least partial access to the aircraft controls, like flight control surfaces and engine speed, is disabled from the flight control input devices. In such a mode, said restricting means are advantageously implemented in order to limit the amplitude of the rotation of the aircraft around the three axes (pitch, yaw and roll) and to limit the speed of the aircraft to a maximal value. In the caution mode, the restricting means are also advantageously configured to prevent the aircraft from descending below a pre-defined altitude. Such mode is consequently implemented such to prevent the pilot or copilot or any third person to steer the aircraft in a way which could jeopardize the security of the flight passengers.

In modern aircrafts, there is usually an on board computer system using various flight control logic to regulate the movement of the flight control surfaces as the rudder and the elevators. The algorithms help correct for pilot errors in normal flight. For example they prevent excessive rudder deflection at high speeds, while allowing more rudder deflection at low speeds for more control. The caution mode will advantageously be implemented in such aircrafts as an extension of such flight control logic further reducing the degrees of freedom left to non authenticated pilots attempting to control the aircraft.

In an advantageous embodiment, the authenticating means of the system according to the invention comprise biometric reading means. Any desired characteristics may be read by said biometric reading means, such as, for example, fingerprint, retina, facial or DNA characteristics. The biometric reading means comprise advantageously at least one of a fingerprint reader, a retina or iris reader and a facial recognition device.

In an advantageous embodiment, the authenticating means comprise means to introduce a password or a secret identifier. Such authenticating means offers the advantage that the possibility to be authenticated will fully depend on the willingness of the authorized person to be authenticated. In the case of a purely biometric authentication process, there is indeed a risk that a person is authenticated against his will after being knocked out for example. Advantageously, every person authorized to operate the aircraft will either choose or receive his individual secret identifier shortly before the take-off of the aircraft through a computer system located outside of the aircraft. Such secret identifier will be stored in a database in electronic form, which is then transferred to the monitoring means and finally to the authenticating means of the system according to the invention.

In an advantageous embodiment, the authenticating means are arranged on aircraft flight control input devices. A fingerprint reader can for example be included in the control stick or yoke of the pilot and of the copilot. Such arrangement provides a minimal disturbance to the (co)pilot when his authentication is requested by the monitoring and authenticating means. Furthermore, as the authenticating means are in the cockpit, it will guarantee that both the pilot and the copilot are present in the cockpit after a successful authentication has occurred, which will even further increase the safety of the system according to the invention.

In an advantageous embodiment, the system according to the invention is combined with a door separating the cockpit from the passengers' area of the aircraft and a locking system enabling to lock said door from inside of the cockpit. Advantageously, said locking system allows authorized persons, generally aircrew members, to access the cockpit thanks to an authenticating system. Advantageously, the locking system can be set in a high security mode, for example thanks to a switch inside the cockpit, wherein the door cannot be unlocked from outside of the cockpit, even by authorized persons. In this high security mode, nobody can access the inside of the cockpit for at least a predetermined amount of time. As already explained above, such lockable door already disclosed in the prior art secures optimally the aircraft against potential hijackers sitting initially in the passengers' area and trying to take control of the aircraft during the flight. However, as also explained above, said door will generate big troubles when one of the pilot and copilot is ill-intentioned, manages to lock out his colleague of the cockpit and sets the door in the high-security mode such to become the only one in command of the aircraft. Combining said door with a system according to the invention wherein the authentication of at least two persons is requested upon detection of a flight restricted event will however provide a system offering an optimal protection against both the actions of a potential hijacker and the actions of a ill-intentioned pilot or copilot in control of the aircraft. In such an embodiment, the authenticating means are advantageously placed inside the cockpit of the aircraft.

In an advantageous embodiment, the monitoring means of the system according to the invention will be configured such to request authentication of the at least two persons authorized to operate the aircraft upon detection of a flight restricted event only after the locking system of the door separating the cockpit from the passengers' area is activated.

In a preferred embodiment, the monitoring means of the system according to the invention will be configured such to request authentication of the at least two persons authorized to operate the aircraft upon detection of a flight restricted event only after the locking system of the door separating the cockpit from the passengers' area is activated in the mode where it cannot be unlocked from outside of the cockpit (high security mode).

In such embodiments, the system according to the invention will provide a minimal disturbance for the pilot and copilot as it will only request their authentication under the rare circumstances wherein the door between the cockpit and the passengers' area is locked or cannot be unlocked from outside of the cockpit (high security mode). These circumstances are only encountered in principle when the pilot and copilot suspect a threat of hijacking from outside of the cockpit or when precisely one of the pilot and copilot tries to isolate himself inside the cockpit to start ill-intentioned maneuvers with the aircraft. In the second situation, wherein the lockable door becomes an obstacle to the safety of the aircraft, the system according to the invention will greatly reduce the scope of the actions of the ill-intentioned pilot or copilot as the access to controls of the aircraft from the flight control input devices will at least partially be restricted due to the unsuccessful requested authentication of the pilot and the copilot upon detection of a flight restricted event.

In an advantageous embodiment, the monitoring means are able to detect whether the locking system of a door between the cockpit and the passengers' area of the aircraft is activated, the monitoring means being configured to be initially in a normal mode and to enter a safety mode when the locking system is activated, the safety mode being a mode wherein additional flight restricted events are detected by the monitoring means compared to the normal mode. In a preferred embodiment, the monitoring means are able to detect whether the locking system of a door between the cockpit and the passengers' area of the aircraft is activated, the monitoring means being configured to be initially in a normal mode and to enter a safety mode when the locking system is activated in the mode where it cannot be unlocked from outside of the cockpit (high security mode).

Similarly, in an advantageous embodiment, the computer implemented method for regulating operation of an aircraft is characterized in that it is initially in a normal mode and it enters a safety mode when the locking system of a door between the cockpit and the passengers' area is activated or is activated in a high security mode wherein it cannot be unlocked from the outside of the cockpit, the safety mode being a mode wherein additional flight restricted events are detected by the monitoring means compared to the normal mode.

In such embodiments, there will be a distinction between a normal mode wherein the authentication of the two authorized persons will be requested in a limited number of situations, while more stringent rules will be applied by the monitoring means, namely more restricted events will be detected and consequently the authentication of the two authorized persons will be requested in a greater number of situations when the locking system of the door between the cockpit and the passengers' area is activated. This two modes embodiment of the system and method according to the invention will allow limiting the interventions of the system and method in case of normal flight conditions wherein the cockpit can be accessed from the passengers area. On the other hand, when the cockpit is locked, the safety mode will increase its number of interventions as this kind of situation could reflect an attempt of a pilot or copilot to take full control of the aircraft and to start ill-intentioned maneuvers. Such embodiment of the system according to the invention consequently limits the inconvenience generated by the system during normal flight conditions, while offering an adequate level of safety under the very rare circumstances wherein the cockpit door is locked.

In the previous embodiments, the monitoring means means, in order to be able to detect whether the locking system of a door between the cockpit and the passengers' area of the aircraft is activated, are advantageously connected to sensors detecting whether the locking system of the door separating the cockpit from the passentgers'area is activated or not.

In the previous embodiments, the system will advantageously not switch back instantly to the normal mode when the cockpit door is unlocked (or is no longer in the high security mode, depending on the embodiment), but will rather wait for a predetermined amount of time before switching back to the normal mode. This will prevent an ill-intentioned (co)pilot to be able to abuse the system by deactivating secretly the locking system of the cockpit door in an attempt to benefit from the more lenient conditions without the other (co)pilot and other aircrew members having enough time to take appropriate measures to regain control of the aircraft. Advantageously, the system according to the invention will also activate warning means like warning lights informing crewmembers and people in the passengers' area when the cockpit door has been unlocked, such to make it possible for them to take the appropriate measures against an ill-intentioned (co)pilot who has just unlocked the cockpit door.

In an advantageous embodiment, the system also comprises alerting means for alerting authorities outside the aircraft if the authentication requested by the monitoring means and authenticating means is not successful. The alerting can consist in informing the competent airport services, an air control center on the ground or the national forces of the states flown over by the aircraft at the time of the restricted event. At that stage, the alerted authorities will be able to take appropriate measures, as for example sending military aircrafts to escort the aircraft from which the alert comes, or advantageously remotely taking control of said aircraft in the case such a remote control system has been implemented for the aircraft. Alternatively, an autopilot mode wherein the aircraft is landed to a near airport could also be triggered automatically by the system according to the invention or remotely by the alerted authorities outside the aircraft.

In an advantageous embodiment, the system according to the invention comprises biometric loading means for loading biometric information electronically regarding all persons authorized to operate the aircraft during a flight. In such an embodiment, the biometric loading means are in communication with the monitoring means and will allow comparing said loaded biometric information to biometric information coming from the biometric reading means of the authenticating means.

In an advantageous embodiment, prior to the flight, the people authorized to operate the aircraft are determined and their biometric information is loaded into the biometric loading means. The biometric information is advantageously loaded with the help of the biometric reading means from the authenticating means. In an alternative embodiment, biometric information that is loaded has previously been taken from the individuals with the help of a separate computer system located outside of the aircraft and stored in a database in electronic form, which is then transferred to the monitoring means and finally to the authenticating means of the system according to the invention.

In an advantageous embodiment, the biometric loading means comprise smart cards in possession of the persons authorized to operate the aircraft and at least one smart card reader in communication with the authenticating means and the monitoring means. In such an embodiment, biometric information of the card owner is contained in the individual smart card as well as information regarding his status and authorization to operate the aircraft for the ongoing flight. When the system according to the invention requests an authentication, a smart card will have to be inserted in the smart card reader and the authenticating means will then compare information from the smart card and information from the biometric reading means. If the smart card belongs to a person authorized to operate the aircraft and if there is a match between its information and biometric information read by the biometric reading means, the authentication will be considered by the system as successful, and as unsuccessful in the other cases.

In an advantageous embodiment, the system according to the invention will comprise a wireless module able to deactivate the restricting means upon reception of encrypted information from outside of the aircraft. Such module will consequently allow a remote deactivation of the restricting means by for example the air traffic controller or any other authorized entity. Such remote deactivation may be useful for example in case of an unfortunate failure of the system according to the invention, which could lead to a undesirable activation of the restricting means for example when no restricted event occurs or in case the authenticating means are deficient. The system according to the invention will have a very robust implementation to render this kind of failures extremely unlikely, but this wireless module will provide an additional safety measure preventing the system according to the invention to inadequately conflict with the steering of the aircraft. In another advantageous embodiment, the wireless module will be configured such to be able to completely disable the system according to the invention, which could be useful in case of deep failure of the system.

In an advantageous embodiment, the monitoring means will be implemented to disable the restricting means in case of a technical problem or breakdowns to the controls of the aircraft. In such an emergency and stressful situation it is indeed preferable to reduce as much as possible the potential conflicts between the system according to the invention and the steering of the aircraft. In such an embodiment, the monitoring means will have to be linked directly or indirectly, for example through the flight management system or central computer of the aircraft, to sensors able to assess if the key components of the aircraft's controls work properly.

In another advantageous embodiment, the system according to the invention will comprise authenticating means accessible to the passengers of the aircraft and the monitoring means will request the authentication of a sufficient sample of passengers before allowing the pilots to perform a critical maneuver with the aircraft. In this embodiment, all the passengers will be considered as authorized persons by the system according to the invention. The critical maneuver can for example be descending below a given altitude in order to start the landing phase. A sufficient sample could for example be 50% of the total numbers of passengers on board the aircraft.

### Short description of the drawings

These and further aspects of the invention will be explained in greater detail by way of example and with reference to the accompanying drawings in which :
- Fig. 1: is schematic representation of an embodiment of the system according to the invention;
- Fig. 2: is a view from above of an cockpit from an aircraft comprising an embodiment of the system according to the invention;
- Fig. 3: is a view of a side-stick being a flight control input device of an aircraft comprising an embodiment of the system according to the invention.

### Detailed description of preferred embodiments

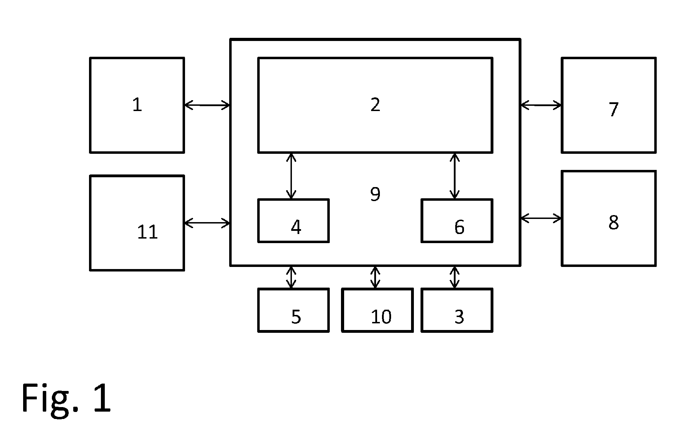

Fig. 1 is schematic representation of an embodiment of the system according to the invention. The system for regulating operation of an aircraft during a flight comprises
- authenticating means 1 for authenticating persons authorized to operate the aircraft;
- monitoring means 2 for monitoring the operation of the aircraft and configured to request authentication by the authenticating means 1 of at least two persons authorized to operate the aircraft upon detection of a flight restricted event, the two authorized persons being the pilot and the copilot of the aircraft;
- restricting means 4 for restricting at least partially access to the controls of the aircraft from the flight control input devices 5;
wherein said monitoring means 2 are configured to activate said restricting means 4 if the authentication of the at least two persons requested by the monitoring means 2 is not successful, said monitoring means 2 being configured to deactivate restricting means 4 upon a successful authentication of at least two people authorized to operate the aircraft.

The monitoring means 2, restricting means 4 and authenticating means 1 constitute parts of the on board aircraft computer system 9 or are at least connected to it. The system also comprises biometric loading means 6, in order to load biometric information regarding all persons authorized to operate the aircraft during a flight that has previously been taken from the individuals with the help of a separate computer system 3 located outside of the aircraft and stored in a database in electronic form. The biometric loading means 6 are in communication with the monitoring means 2 and will allow comparing said loaded biometric information to biometric information coming from the biometric reading means of the authenticating means 1.

In the embodiment represented in Fig. 1, the system according to the invention comprises means 7 for measuring the altitude of the aircraft. Such means 7 can be a pre-existing altimeter of the aircraft or an altimeter specifically dedicated to the system according to the invention. In this embodiment, an attempt from the flight control input devices 5 to descend below a predefined altitude will be considered as a restricted event by the monitoring means 2, and the monitoring means 2 and restricting means 4 will be configured to prevent the aircraft to descend below said predefined altitude when the cockpit door is locked and the authentication of the pilot and copilot requested by the authenticating means 1 is not successful. Such altitude can for example be 1000 feet, but could be higher if the flight path is across mountains. If after a predefined amount of time the authentication of the pilot and copilot is still not successful, the monitoring means 2 will activate the autopilot mode 10 or another automatic flight control system in order to restrict as much as possible the control from the flight control input devices 5.

The system also comprises detecting means 8 for detecting whether the locking system of the door separating the cockpit from the passengers' area of the aircraft is activated or not. The monitoring means 2 are configured such to request authentication of the pilot and copilot only when said locking system is activated. In alternative embodiments, the monitoring means 2 are configured such to request authentication of the pilot and copilot only when said locking system is activated in a high security mode, namely when it is in mode where it cannot be deactivated from outside of the cockpit.

The system also comprises alerting means 10 for alerting authorities outside the aircraft when the authentication requested by the monitoring means 2 and authenticating means 1 is not successful. The alerting can consist in informing the competent airport services, an air control center on the ground or the national forces of the states flown over by the aircraft at the time of the restricted event. At that stage, the alerted authorities will take the appropriate measures, as for example sending military aircrafts to escort the aircraft from which the alert was emitted, or remotely taking control of said aircraft in case such a remote control system has been implemented for the aircraft. Alternatively, an autopilot mode wherein the aircraft is landed to a near airport could also be triggered automatically by the system according to the invention or remotely by the alerted authorities outside the aircraft.

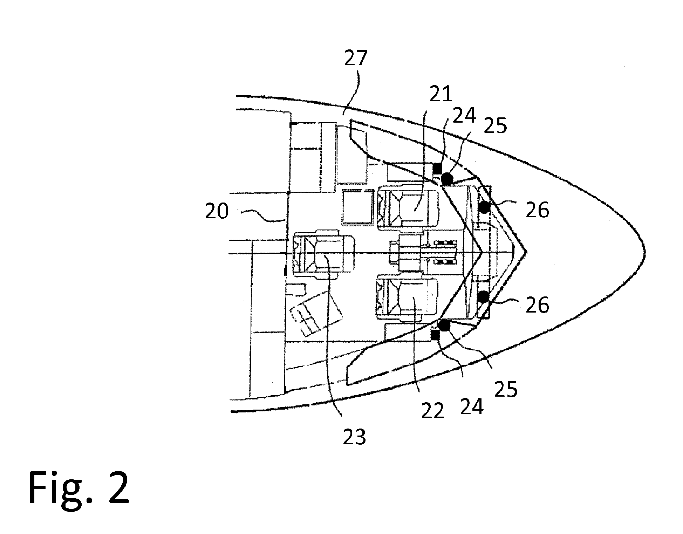

Fig. 2 is a view from above of an a cockpit 27 from an aircraft comprising an embodiment of the system according to the invention. A secured door 20 at the entrance of the cockpit prevents unauthorized individual from entering the cockpit. A seat for a pilot 21, of a copilot 22 and for a third crew member 23 are arranged so as to make control of the aircraft as ergonomic as possible. Smartcard readers 24, fingerprint readers 25 and facial recognition devices 26 are arranged near the pilot and copilot seats 21, 22. Such readers and devices are the authenticating means 1 used by the system according to the invention when an authentication of the pilot and copilot is requested by the monitoring means 2, if the locking system of the secured door is activated and when a restricted event has occurred

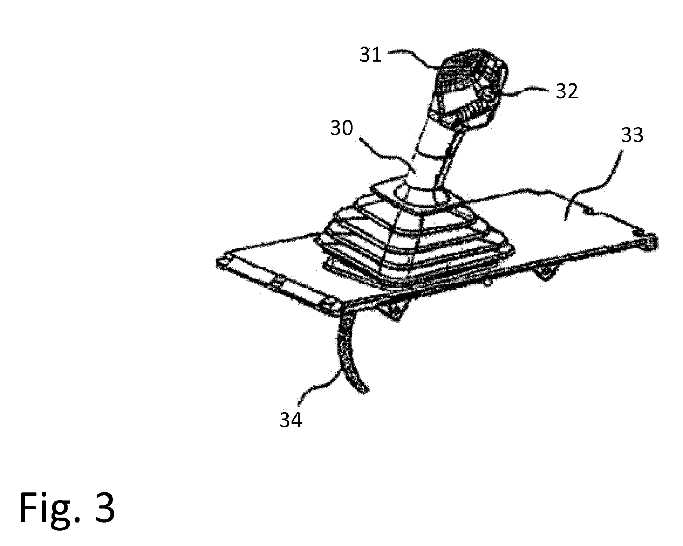

Fig. 3 is a view of a side-stick 30 being a flight control input device of an aircraft comprising an embodiment of the system according to the invention. The side-stick 30 comprises a biometric sensor for fingerprint recognition 31, besides a device 32 for taking back of controls by the (co)pilot on the autopilot. Such taking back is of course only possible when the autopilot has been set voluntarily by the (co)pilot and not when the autopilot has been entered because a non successful authentication requested by the monitoring means 2 after a restricted event has taken place. The side-stick is mounted on a support 33 adapted to accommodate a specific wiring 34 intended to communicate information from the sensor 31 to the monitoring means 2.

It will be appreciated by persons skilled in the art that the present invention is not limited by what has been particularly shown and described hereinabove. The invention resides in each and every novel characteristic feature and each and every combination of characteristic features. Reference numerals in the claims do not limit their protective scope. Use of the verb "to comprise" and its conjugations does not exclude the presence of elements other than those stated. Use of the article "a" or "an" preceding an element does not exclude the presence of a plurality of such elements. The present invention has been described in terms of specific embodiments, which are illustrative of the invention and not to be construed as limiting.

## Claims

1. System for regulating operation of an aircraft during a flight, comprising:
- authenticating means (1) for authenticating persons authorized to operate the aircraft;
- monitoring means (2) for monitoring the operation of the aircraft and configured to request authentication by the authenticating means (1) of at least two persons authorized to operate the aircraft upon detection of a flight restricted event;
- restricting means (4) for restricting at least partially access to the controls of the aircraft from the flight control input devices (5) ;
wherein said monitoring means (2) are configured to activate said restricting means (4) if the authentication of the at least two persons requested by the monitoring means (2) is not successful, said monitoring means (2) being configured to deactivate restricting means (4) upon a successful authentication of at least two people authorized to operate the aircraft.

2. System according to claim 1 **characterized in that** the at least two authorized persons whose authentication is requested by the monitoring means (2) comprise the pilot and copilot of the aircraft.

3. System according to anyone of the preceding claims **characterized in that** the monitoring means (2) are configured to allow granting authority to operate the aircraft to additional persons during the flight.

4. System according to anyone of the preceding claims **characterized in that** the flight restricted events comprise a request from the flight control input devices (5) to descend below a pre-defined altitude, said restricting means (4) being configured to prevent the aircraft to be steered below said pre-defined altitude.

5. System according to anyone of the preceding claims **characterized in that** the restricted events comprise a request from the flight control input devices (5) to deviate from a pre-defined course, the restricting means (4) being configured to enter the autopilot mode (10) or another automatic flight control system preventing the aircraft to deviate from the pre-defined course.

6. System according to anyone of the preceding claims **characterized in that** the restricting means (4) comprise an electronic module restricting the inputs from the flight control input devices (5) sent to the actuators of the flight control surfaces and to the aircraft engines.

7. System according to anyone of the preceding claims **characterized in that** the authenticating means (1) comprise biometric reading means (25, 26).

8. System according to anyone of the preceding claims **characterized in that** the authenticating means (1) comprise means to introduce a password or a secret identifier.

9. System according to anyone of the preceding claims **characterized in that** the authenticating means (1) are arranged on aircraft flight control input devices (31).

10. System according to anyone of the preceding claims **characterized in that** it comprises biometric loading means (6) for loading biometric information electronically regarding all persons authorized to operate the aircraft during a flight.

11. System according to anyone of the preceding claims **characterized in that** it comprises a wireless module able to deactivate the restricting means (4) upon reception of encrypted information from outside of the aircraft.

12. System according to anyone of claims 1 to 11 **characterized in that** the monitoring means (2) are able to detect whether the locking system of a door between the cockpit and the passengers' area of the aircraft is activated, the monitoring means (2) being configured to be initially in a normal mode and to enter a safety mode when the locking system is activated or is activated in a high security mode wherein it cannot be unlocked from the outside of the cockpit, the safety mode being a mode wherein additional flight restricted events are detected by the monitoring means (2) compared to the normal mode.

13. System according to anyone of the preceding claims **characterized in that** the monitoring means (2) are able to detect whether the locking system of a door between the cockpit and the passengers' area of the aircraft is activated, said monitoring means (2) being configured to request authentication of the at least two persons authorized to control the aircraft upon detection of a flight restricted event only after said locking system is activated or is activated in a high security mode wherein it cannot be unlocked from the outside of the cockpit.

14. Computer implemented method for regulating operation of an aircraft during a flight, comprising the steps of:
- monitoring the operation of the aircraft and requesting authentication of at least two persons authorized to operate the aircraft upon detection of a flight restricted event, a flight restricted event being an event reflecting an increased risk for the safety of the passengers of the aircraft;
- restricting at least partially access to the controls of the aircraft from the flight control input devices (5) if the authentication of the at least two persons requested is not successful, stopping said restriction upon a successful authentication of at least two people authorized to operate the aircraft.

15. Computer implemented method for regulating operation of an aircraft during a flight according to claim 14, **characterized in that** it is initially in a normal mode and it enters a safety mode when the locking system of a door between the cockpit and the passengers' area is activated or is activated in a high security mode wherein it cannot be unlocked from the outside of the cockpit, the safety mode being a mode wherein additional flight restricted events are detected by the monitoring means compared to the normal mode.
